# EUROPEAN PATENT SPECIFICATION

(11) **EP 4 503 276 B1**
(45) Date of publication and mention of the grant of the patent: **19.08.2026**
(21) Application number: 23779944.0
(22) Date of filing: 22.03.2023
(51) Int. Cl.: H01M 50/126, H01M 50/121, H01M 50/129, H01M 50/131

(54) **OUTER PACKAGING MATERIAL FOR ALL SOLID-STATE BATTERY AND ALL SOLID-STATE BATTERY**
ÄUSSERES VERPACKUNGSMATERIAL FÜR FESTKÖRPERBATTERIE UND FESTKÖRPERBATTERIE
MATÉRIAU D'EMBALLAGE EXTERNE POUR BATTERIE ENTIÈREMENT SOLIDE ET BATTERIE ENTIÈREMENT SOLIDE

(30) Priority: 31.03.2022 JP 2022059061
(43) Date of publication of application: 05.02.2025
(73) Proprietor: Toppan Holdings Inc., Tokyo 110-0016 (JP)
(72) Inventor: MURAKI, Takuya, Tokyo 110-0016 (JP)
(74) Representative: Hoffmann Eitle
(86) International application number: PCT/JP2023/011205
(87) International publication number: WO 2023/189932

(56) References cited:
- WO-A1-2016/159278
- WO-A1-2020/153458
- JP-A- 2015 065 159
- JP-A- 2015 232 961
- JP-A- 2018 147 860
- JP-A- 2021 166 134
- "Large Area and Flexible Electronics", 31 December 2007, WILEY, ISBN: 978-3-527-67997-3, article MACDONALD WILLIAM A. ET AL: "Latest Advances in Substrates for Flexible Electronics", pages: 291 - 314, XP093284434, DOI: 10.1002/9783527679973.ch10

## Description

### [Technical Field]

The present disclosure relates to a solid-state battery packaging material and a solid-state battery.

### [Background Art]

In recent years, solid-state batteries that can achieve larger capacity have been rapidly developed. Unlike current lithium-ion batteries, solid-state batteries contain a solid electrolyte, and this allows the use of batteries at high temperature never before possible and eliminates the need for equipment for cooling the batteries. Accordingly, solid-state batteries are expected to achieve higher space efficiency, lower cost, lower power, and the like.

Such a solid-state battery includes a battery body that includes a solid electrolyte and an electrode, and a packaging bag that houses the battery body, and the packaging bag is obtained by heat sealing a packaging material.

For lithium-ion batteries, the use of a packaging material including a substrate layer, a barrier layer (metal foil layer), and a sealant layer as a battery packaging material is conventionally considered. In particular, in order to achieve a packaging material having better deep drawing formability and larger battery capacity, the use of a laminate film composed of a plurality of laminated films as a substrate layer is proposed (see, for example, Patent Literature 1).

An exterior material for electrical storage devices comprising a base material layer which consists of a heat-resistant resin film, a sealant layer as an inner side layer, and a metal foil layer arranged between the base material layer and the sealant layer is also disclosed in Patent Literature 2.

### [Citation List]

### [Patent Literature]

[PTL 1] WO 2016/159278 A
[PTL 2] JP 2018 147860 A

### [Summary of the Invention]

### [Technical Problem]

However, when a laminate film as described in Patent Literature 1 is used as a substrate layer of a packaging material for a solid-state battery, during heat sealing, air bubbles generated in the substrate layer may remain in the substrate layer and be observed as "lifting". The occurrence of lifting may cause the substrate layer to start to peel off, leading to reduction in reliability in terms of chemical resistance, scratch resistance, or the like.

The present disclosure has been made in view of the above problem, and an object of the present disclosure is to provide a solid-state battery packaging material that has good formability and prevents the occurrence of lifting in a substrate layer during heat sealing, and a solid-state battery including the solid-state battery packaging material.

### [Solution to Problem]

The present inventors have studied the cause of the phenomenon in which lifting occurs in the substrate layer as described above. As a result, the present inventors consider that this phenomenon may be caused by heat sealing packaging materials at high temperature. Solid-state battery packaging materials are developed in the direction of increasing the melting point of a sealant layer of the packaging materials, assuming the use of the packaging materials under high-temperature environmental conditions. Furthermore, in a solid-state battery packaging material in which a substrate layer is composed of a plurality of resin films to achieve better formability and different performances, heat generated during heat sealing is less likely to be transferred to a sealant layer. Due to such circumstances, solid-state battery packaging materials tend to be heat sealed at high temperature. The present inventors consider that when a packaging material is heat sealed at high temperature, moisture in resin films constituting a substrate layer of the packaging material may be rapidly evaporated and remain between the resin films even after cooling. The present inventors consider that the phenomenon may also largely depend on the water content in the resin films. Thus, as a result of further extensive study, the present inventors have found that the following disclosure can solve the above problem.

That is, the present invention is directed to a solid-state battery packaging material according to the appended claims. It is a solid-state battery packaging material including at least a substrate layer, a barrier layer, and a sealant layer in this order, wherein the substrate layer includes at least two biaxially stretched resin films, and one or more of the at least two resin films other than an outermost layer have a water content of 4000 mass ppm or less.

In the packaging material of the present invention, the substrate layer is a multilayer film, and thus the substrate layer itself has high strength. Furthermore, during heat sealing, generation of air bubbles in the substrate layer is prevented; thus, lifting is less likely to occur in the substrate layer, preventing reduction in adhesion between the resin films constituting the substrate layer. This enables the packaging material to have good formability. Furthermore, even when a solid-state battery including the packaging material is used under high-temperature environmental conditions, and a battery body containing a solid electrolyte expands so that a force acts to open the packaging bag, the reliability of the packaging material can be maintained. In some cases, a pressure is applied to a battery cell to increase the ionic conductance of a solid electrolyte. At that time, if foreign matter enters between the battery cell and a device that applies a pressure to the battery cell, a hole is more likely to be formed in the battery cell; however, the use of a substrate layer composed of a multilayer film makes it easy to address such a problem.

In the solid-state battery packaging material, the substrate layer preferably has a thickness of 24 to 100 µm. In such a case, the substrate layer suitably protects the barrier layer, and the substrate layer is more likely to prevent a situation in which heat generated during heat sealing is less likely to be transferred to the sealant layer.

In the solid-state battery packaging material, the at least two resin films are adhered to each other via an adhesive layer, preferably having a thickness of 1 to 10 µm. In such a case, the adhesive layer is more likely to achieve a formability improvement effect and to prevent a lower volume energy density of the battery. Furthermore, in some cases, during formation of the adhesive layer, CO₂ is generated; however, an adhesive layer that does not have an excessively large thickness is more likely to reduce the amount of generated CO₂ (generation of air bubbles due to the generation of CO₂ is also reduced).

In the solid-state battery packaging material, the at least two resin films are preferably polyester films containing a polyester resin. A polyester film that has high heat resistance is suitable for heat sealing at high temperature and for use in a battery under high-temperature environmental conditions.

In the solid-state battery packaging material, the adhesive layer contains a polyester urethane resin, which is a reaction product of polyester polyol and isocyanate. A polyester urethane resin that has high heat resistance is suitable for heat sealing at high temperature and for use in a battery under high-temperature environmental conditions.

In the solid-state battery packaging material, a CO₂ transmittance of the at least two resin films that is measured in accordance with JIS K 7126 is preferably 60 ml·mm/m²·d·MPa or more. In some cases, during formation of the adhesive layer, CO₂ is generated, and in the case where the substrate layer is a multilayer, a large amount of CO₂ is generated. CO₂ generated in this manner remains as air bubbles in the adhesive layer; thus, the adhesive layer may be more likely to be damaged, causing the packaging material to have poor formability. In order to address this problem, the resin films constituting the substrate layer preferably have the above CO₂ transmittance.

In the solid-state battery packaging material, the sealant layer preferably has a melting point of 150°C or higher. In such a case, the sealant layer can prevent reduction in sealing strength of the packaging material when the packaging material is used under high-temperature environmental conditions.

The solid-state battery packaging material preferably further includes a modified layer that contains a silicone resin and is provided on the substrate layer. In the case where films having high wettability (e.g., polyester films) are used as a substrate layer, smearing is more likely to occur when a barcode for lot tracing is printed using an ink-jet printer after production of the battery. This makes it difficult to read the barcode. The modified layer provided on the substrate layer can address such a problem.

Furthermore, the present invention is directed to a solid-state battery including a battery body that contains a solid electrolyte, and a packaging bag that houses the battery body, wherein the packaging bag is a packaging bag obtained by heat sealing the solid-state battery packaging material.

In the solid-state battery of the present invention, the packaging bag is obtained by heat sealing the solid-state battery packaging material. In the packaging material, the substrate layer is a multilayer film, and thus the substrate layer itself has high strength. Furthermore, during heat sealing, generation of air bubbles in the substrate layer is prevented; thus, lifting is less likely to occur in the substrate layer, preventing reduction in adhesion between the resin films constituting the substrate layer. This enables the packaging material to have good formability. Furthermore, even when the solid-state battery is used under high-temperature environmental conditions and the battery body expands so that a force acts to open the packaging bag, the packaging material allows the solid-state battery to maintain the sealed state of the packaging bag.

### [Advantageous Effects of the Invention]

The present invention provides a solid-state battery packaging material that has good formability and prevents the occurrence of lifting in a substrate layer during heat sealing, and a solid-state battery including the solid-state battery packaging material.

### [Brief Description of the Drawings]

Fig. 1 is a schematic cross-sectional view of a solid-state battery packaging material according to an embodiment of the present disclosure.
Fig. 2 is a schematic cross-sectional view of a solid-state battery packaging material according to another embodiment of the present disclosure.
Fig. 3 is a schematic cross-sectional view of a solid-state battery packaging material according to still another embodiment of the present disclosure.
Fig. 4 is a perspective view of a solid-state battery according to an embodiment of the present disclosure.
Fig. 5 is a plan view of a structure for obtaining evaluation samples of examples and comparative examples.

### [Description of the Embodiments]

Preferred embodiments of the present disclosure will be described in detail below with reference to the drawings as appropriate. In the drawings, the same or corresponding components are denoted by the same reference numerals, and redundant description is omitted. Furthermore, dimensional ratios in the drawings are not limited to the ratios shown in the drawings.

### [Solid-state battery packaging material]

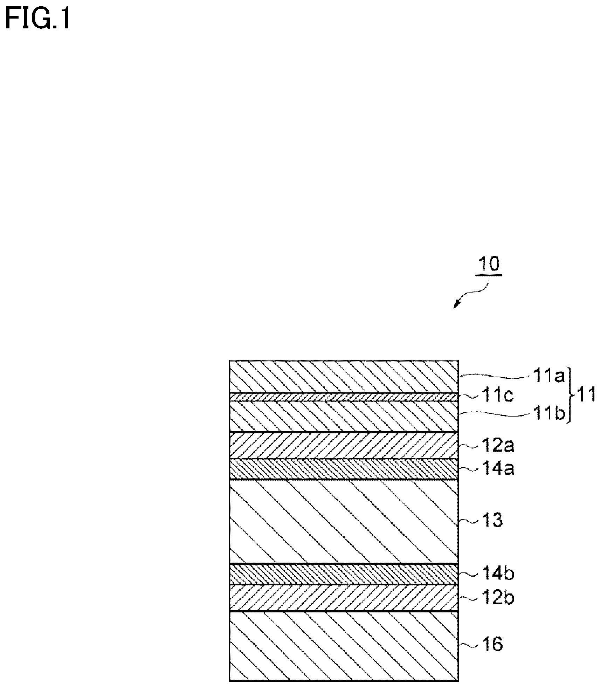

Fig. 1 is a schematic cross-sectional view of a solid-state battery packaging material according to an embodiment of the present disclosure. As shown in Fig. 1, a solid-state battery packaging material (hereinafter also simply referred to as a "packaging material") 10 of the present embodiment includes a substrate layer 11, a first adhesive layer 12a, a barrier layer 13, a second adhesive layer 12b, and a sealant layer 16 in this order. The substrate layer 11 includes a resin film 11a as an outermost layer, and a resin film 11b that is laminated, via a substrate adhesive layer 11c, at a position closer to the inner layer side (barrier layer side) than the resin film 11a is. The resin film 11a as an outermost layer is one of the resin films constituting the substrate layer that is farthest from the barrier layer 13. A resin film laminated at a position closer to the inner layer side than the resin film 11a can be referred to as an inner layer side resin film. In Fig. 1, the substrate layer 11 includes only the resin film 11b as a single inner layer side resin film; however, the substrate layer 11 may include a plurality of inner layer side resin films. The resin film 11b has a water content of 4000 mass ppm or less. In the packaging material 10, as compared with the case where the water content of the resin film 11b exceeds 4000 mass ppm, it is possible to further prevent generation of air bubbles in the substrate layer 11 of the packaging material 10 during heat sealing of the packaging material 10.

The barrier layer 13 may include a first anticorrosion treatment layer 14a on the substrate layer 11 side. Furthermore, the barrier layer 13 may include a second anticorrosion treatment layer 14b on the sealant layer 16 side. In the packaging material 10, the substrate layer 11 is the outermost layer, and the sealant layer 16 is the innermost layer. That is, the packaging material 10 is used in a solid-state battery so that the substrate layer 11 faces the outside of the solid-state battery and the sealant layer 16 faces the inside of the solid-state battery.

The layers constituting the packaging material 10 will be described in detail below.

### <Substrate layer>

The substrate layer 11 allows the packaging material for the solid-state battery to have heat resistance in a sealing process during production of the solid-state battery, and prevents the possible occurrence of pinholes during forming processing and distribution. In the case of the packaging material for a large solid-state battery in particular, the substrate layer 11 can also allow the packaging material to have scratch resistance, chemical resistance, insulating properties, and the like.

The substrate layer 11 is preferably composed of resin films having insulating properties. Examples of the resin include a polyester resin, a polyamide resin, a polyimide resin, a polyamideimide resin, a polyether ketone resin, a polyphenylene sulfide resin, a polyetherimide resin, a polysulfone resin, a fluororesin, a phenol resin, a melamine resin, a urethane resin, an allyl resin, a silicon resin, an epoxy resin, a furan resin, and an acetylcellulose resin.

Of the above resins, a polyester resin (polyester-based resin) is preferable as the substrate layer 11 because a polyester resin has good formability, is less likely to absorb moisture, and has high heat resistance. Examples of the polyester resin include polyethylene terephthalate, polybutylene terephthalate, and polyethylene naphthalate.

As a resin film, a biaxially stretched film is used from the viewpoint of achieving good deep drawing formability. The biaxially stretched film may be obtained, for example, by sequential biaxial stretching, tubular biaxial stretching, simultaneous biaxial stretching, or the like. The biaxially stretched film is preferably obtained by tubular biaxial stretching, from the viewpoint of achieving better deep drawing formability.

The substrate layer 11 includes at least two resin films. The resin films include the resin film 11a, and the resin film 11b laminated at a position closer to the inner layer side than the resin film 11a is. These two or more resin films included in the substrate layer 11 may be films containing the same resin, or may be films containing different resins. The resin films can be laminated via an adhesive layer. The adhesive layer is referred to as the substrate adhesive layer 11c. The substrate layer 11 preferably includes not more than three resin films, from the viewpoint of lead time for processing and material cost.

Specific examples of the material for forming the substrate adhesive layer 11c include a polyurethane resin obtained by allowing a bi- or higher-functional isocyanate compound (polyfunctional isocyanate compound) to act on a base resin such as a polyester polyol, a polyether polyol, an acrylic polyol, or a carbonate polyol. The various polyols described above can be used singly or in combination of two or more, according to the function and performance required for the packaging material 10. The substrate adhesive layer 11c preferably contains a polyester urethane resin, which is a reaction product of polyester polyol and isocyanate, because a polyester urethane resin is suitable for heat sealing at high temperature and for use in a battery under high-temperature environmental conditions. The isocyanate compound may be isophorone diisocyanate (IPDI), tolylene diisocyanate (TDI), hexamethylene diisocyanate (HDI), or the like, and these isocyanate compounds are preferably used in combination, from the viewpoint that heat resistance and flexibility are more likely to be achieved. In addition to the adhesive component, the substrate adhesive layer 11c may contain other various additives such as a stabilizer, according to the performance required for the adhesive.

The resin films are preferably adhered to each other via the substrate adhesive layer 11c having a thickness of 1 to 10 µm. The substrate adhesive layer 11c having a thickness of 1 µm or more is more likely to achieve a formability improvement effect, and the substrate adhesive layer 11c having a thickness of 10 µm or less is more likely to prevent a lower volume energy density of the battery. Furthermore, in some cases, during formation of the substrate adhesive layer 11c, CO₂ is generated; however, the substrate adhesive layer 11c that does not have an excessively large thickness is more likely to reduce the amount of generated CO₂ (generation of air bubbles due to the generation of CO₂ is also reduced). From this viewpoint, the thickness of the substrate adhesive layer 11c is more preferably 2 to 7 µm, and still more preferably 3 to 6 µm.

The inner layer side resin films including the resin film 11b have a water content of 4000 mass ppm or less. This prevents generation of air bubbles in the substrate layer 11 during heat sealing, thus preventing reduction in adhesion between the resin films constituting the substrate layer 11 (e.g., between the resin films 11a and 11b) and reduction in adhesion between the substrate layer 11 and the barrier layer 13. From this viewpoint, the water content is preferably 3500 mass ppm or less, and more preferably 3000 mass ppm or less. The water content may be 0 mass ppm. However, from the viewpoint of dimensional stability, the water content can be 500 mass ppm. The water content can be adjusted by varying the storage temperature, humidity and storage time of the resin films.

The water content is measured in the following manner. That is, a 10 cm × 10 cm piece is cut out from a resin film stored in an environment at 23°C and 50% RH for 2 days. The film piece is placed and heated in an evaporation heating device (manufactured by HIRANUMA Co., Ltd., EV-2000) set to 300°C, and the amount of generated water is measured for 30 minutes using a Karl Fischer device (manufactured by HIRANUMA Co., Ltd., AQ-2100). At this time, dry N₂ gas is used as carrier gas. The amount of water measured is used to calculate the water content based on the following equation.$Water content \left(mass ppm\right) = \left(Amount of water measured \left(g\right)/Mass of film \left(g\right)\right) \times {10}^{6}$

The CO₂ transmittance of the resin films constituting the substrate layer 11 that is measured in accordance with JIS K 7126 is preferably 60 ml·mm/m²·d·MPa or more. In some cases, during formation of the adhesive layer, CO₂ is generated, and in the case where the substrate layer is a multilayer, a large amount of CO₂ is generated. CO₂ generated in this manner remains as air bubbles in the adhesive layer; thus, the adhesive layer may be more likely to be damaged, causing the packaging material to have poor formability. In order to address this problem, the resin films constituting the substrate layer preferably have the above CO₂ transmittance. From this viewpoint, the CO₂ transmittance is more preferably 100 ml·mm/m²·d·MPa or more, and still more preferably 500 ml·mm/m²·d·MPa or more.

In the substrate layer 11, from the viewpoint of achieving even better formability, adjacent resin films are preferably laminated so as to satisfy the following conditions. Due to the bowing effect, in a certain direction, a biaxially stretched film has high strength but is difficult to stretch, and in another direction, the biaxially stretched film has low strength but is easy to stretch (there is non-uniformity in breaking strength and breaking elongation). Even when substrates from the same primary roll are used, such non-uniformity can occur depending on the position on the roll from which the substrates are taken after slitting. The substrate layer 11 composed of a laminate film has higher strength than a single-layer film having a thickness equivalent to that of the laminate film. Biaxially stretched films that stretch in the following different manners bonded to each other are more likely to have enhanced strength, have higher breaking elongation, and achieve even better formability.
(Conditions) Resin films are laminated so that the direction in which stress is high at 10% elongation in a tensile test using a Tensilon in a 45-degree direction and a 135-degree direction with respect to the stretching direction of one of the resin films coincides with the direction in which stress is low at 10% elongation in a tensile test using Tensilon in a 45-degree direction and a 135-degree direction with respect to the stretching direction of the other resin film.

The substrate layer 11 preferably has a thickness of 24 to 100 µm. A substrate layer 11 having a thickness of 24 µm or more is more likely to suitably protect the barrier layer, and a substrate layer 11 having a thickness of 100 µm or less is more likely to prevent a situation in which heat generated during heat sealing is less likely to be transferred to the sealant layer. From this viewpoint, the thickness of the substrate layer 11 is more preferably 25 to 75 µm, and still more preferably 27 to 50 µm.

The thickness of each of the resin films constituting the substrate layer 11 is not particularly limited, but is more preferably 8 to 50 µm, and still more preferably 12 to 38 µm, from the viewpoint of processability.

In order to prevent deformation of the substrate layer 11 during sealing, the melting point of each of the resin films constituting the substrate layer 11 is preferably higher than the melting point of the sealant layer 16, and more preferably higher by 30°C or more than the melting point of the sealant layer 16.

### <First adhesive layer>

The first adhesive layer 12a adheres the substrate layer 11 to the barrier layer 13. Specific examples of the material for forming the first adhesive layer 12a include the materials described as examples of the material for forming the substrate adhesive layer 11c. The material for forming the first adhesive layer 12a may be the same as or different from the material for forming the substrate adhesive layer 11c.

The thickness of the first adhesive layer 12a is not particularly limited, but is preferably, for example, 1 to 10 µm, and more preferably 2 to 7 µm, from the viewpoint of obtaining desired adhesive strength, conformability, processability, properties of reducing the amount of generated CO₂, and the like.

### <Barrier layer>

The barrier layer 13 has water vapor barrier performance to prevent moisture from entering the solid-state battery. The barrier layer 13 may have ductility for deep drawing. The barrier layer 13 may be, for example, a metal foil of various metals such as aluminum, stainless steel, or copper, or a metal vapor deposition film, an inorganic oxide vapor deposition film, a carbon-containing inorganic oxide vapor deposition film, a film provided with such a vapor deposition film, or the like. The film provided with a vapor deposition film may be, for example, an aluminum vapor deposition film, or an inorganic oxide vapor deposition film. These can be used singly or in combination of two or more. The barrier layer 13 is preferably a metal foil, and more preferably an aluminum foil, in terms of mass (specific gravity), moisture resistance, processability, and cost.

The aluminum foil may preferably be an annealed soft aluminum foil in particular, from the viewpoint of obtaining desired ductility during forming. However, the aluminum foil is more preferably an aluminum foil containing iron, for the purpose of obtaining further pinhole resistance and ductility during forming. The iron content in the aluminum foil is preferably 0.1 to 9.0 mass%, and more preferably 0.5 to 2.0 mass%, with respect to 100 mass% of aluminum foil. When the iron content is 0.1 mass% or more, the packaging material 10 can have higher pinhole resistance and ductility. When the iron content is 9.0 mass% or less, the packaging material 10 can have higher flexibility. The aluminum foil may be an untreated aluminum foil, but is preferably a degreased aluminum foil from the viewpoint of obtaining corrosion resistance. When the aluminum foil is degreased, only one surface of the aluminum foil may be degreased, or both surfaces of the aluminum foil may be degreased.

The thickness of the barrier layer 13 is not particularly limited, but is preferably 9 to 200 µm, and more preferably 15 to 100 µm, considering barrier performance, pinhole resistance, and processability.

### <First and second anticorrosion treatment layers>

The first anticorrosion treatment layer 14a and the second anticorrosion treatment layer 14b are provided to prevent corrosion of the metal foil (metal foil layer) or the like constituting the barrier layer 13. The first anticorrosion treatment layer 14a improves the adhesion between the barrier layer 13 and the first adhesive layer 12a. The second anticorrosion treatment layer 14b improves the adhesion between the barrier layer 13 and the second adhesive layer 12b. The first anticorrosion treatment layer 14a and the second anticorrosion treatment layer 14b may have the same configuration or different configurations. The first anticorrosion treatment layer 14a and the second anticorrosion treatment layer 14b (hereinafter also simply referred to as "anticorrosion treatment layers 14a and 14b") are formed, for example, by degreasing treatment, hydrothermal conversion treatment, anodic oxidation treatment, chemical conversion treatment, or a combination of these treatments.

Examples of the degreasing treatment include acid degreasing treatment and alkaline degreasing treatment. In the acid degreasing treatment, an inorganic acid such as sulfuric acid, nitric acid, hydrochloric acid, or hydrofluoric acid may be used singly or as a mixture. The acid degreasing treatment using an acid degreasing agent obtained by dissolving a fluorine-containing compound such as monosodium ammonium difluoride in the inorganic acid is effective in terms of corrosion resistance in particular when the barrier layer 13 is composed of an aluminum foil because it is possible not only to obtain the effect of degreasing aluminum but also to form a fluoride of aluminum in a passive state. In the alkaline degreasing treatment, sodium hydroxide or the like may be used.

Examples of the hydrothermal conversion treatment include boehmite treatment in which an aluminum foil is immersed in boiling water containing triethanolamine. Examples of the anodic oxidation treatment include alumite treatment.

The chemical conversion treatment may be an immersion-type chemical conversion treatment or a coating-type chemical conversion treatment. Examples of the immersion-type chemical conversion treatment include chromate treatment, zirconium treatment, titanium treatment, vanadium treatment, molybdenum treatment, calcium phosphate treatment, strontium hydroxide treatment, cerium treatment, ruthenium treatment, and various chemical conversion treatments using mixed phases of these materials. Examples of the coating-type chemical conversion treatment include a treatment in which a coating agent having anticorrosion performance is applied onto the barrier layer 13.

Of these anticorrosion treatments, before any of the hydrothermal conversion treatment, the anodic oxidation treatment, and the chemical conversion treatment is performed to form at least part of the anticorrosion treatment layers, it is preferable to perform the aforementioned degreasing treatment in advance. When the barrier layer 13 is composed of a degreased metal foil such as an annealed metal foil, no degreasing treatment is required to form the anticorrosion treatment layers 14a and 14b.

The coating agent used for the coating-type chemical conversion treatment preferably contains trivalent chromium. The coating agent may contain at least one polymer selected from the group consisting of a cationic polymer and an anionic polymer described later.

Of the treatments described above, in the hydrothermal conversion treatment and the anodic oxidation treatment in particular, the surface of an aluminum foil is dissolved with a treatment agent to form an aluminum compound (boehmite or alumite) having high corrosion resistance. Thus, a co-continuous structure extending from the barrier layer 13 composed of an aluminum foil to the anticorrosion treatment layers 14a and 14b is formed, and these treatments are therefore included in the definition of chemical conversion treatment. However, as described later, the anticorrosion treatment layers 14a and 14b can be formed only by a pure coating method that is not included in the definition of chemical conversion treatment. In such a coating method, for example, a sol of a rare-earth element oxide such as cerium oxide with an average particle size of 100 nm or less may be used as a material that has an anticorrosion effect (inhibitor effect) for aluminum and is preferable in terms of environmental aspects. The use of such a rare-earth element oxide sol allows a metal foil such as an aluminum foil to have an anticorrosion effect even when a typical coating method is used.

Examples of the rare-earth element oxide sol include sols containing various solvents such as an aqueous solvent, an alcoholic solvent, a hydrocarbon solvent, a ketone solvent, an ester solvent, or an ether solvent. Of these, an aqueous sol is preferable.

To stabilize the dispersion of the rare-earth element oxide sol, the rare-earth element oxide sol typically contains, as a dispersion stabilizer, an inorganic acid such as nitric acid, hydrochloric acid, or phosphoric acid, or a salt thereof, or an organic acid such as acetic acid, malic acid, ascorbic acid, or lactic acid. Of these dispersion stabilizers, phosphoric acid in particular is expected to achieve, in the packaging material 10, (1) stabilized dispersion of the sol, (2) higher adhesion to the barrier layer 13 due to the aluminum-chelating ability of the phosphoric acid, (3) corrosion resistance obtained by capturing aluminum ions (passivation), (4) a higher cohesive force of the anticorrosion treatment layers (oxide layers) 14a and 14b due to the easy occurrence of dehydration condensation of the phosphoric acid at low temperature, and the like.

The anticorrosion treatment layers 14a and 14b composed of the rare-earth element oxide sol are an aggregate of inorganic particles, and this may cause the layers to have a low cohesive force even after dry curing. Thus, in such a case, in order to compensate the cohesive force, the anticorrosion treatment layers 14a and 14b are preferably combined with an anionic polymer or a cationic polymer to form a composite layer.

The anticorrosion treatment layers 14a and 14b are not limited to the layers described above. For example, the anticorrosion treatment layers 14a and 14b may be formed using a treatment agent obtained by adding phosphoric acid and a chromium compound to a resin binder (aminophenol, etc.), as in a coating-type chromate treatment that is a known technique. The use of the treatment agent allows the anticorrosion treatment layers 14a and 14b to have both anticorrosion properties and adhesion. Alternatively, it is possible to allow the anticorrosion treatment layers 14a and 14b to have both anticorrosion properties and adhesion by using a coating agent prepared in advance by combining a rare-earth element oxide sol with a polycationic polymer or a polyanionic polymer, although the stability of the coating agent needs to be considered.

Regardless of whether the anticorrosion treatment layers 14a and 14b have a multilayer structure or a single-layer structure, the mass per unit area of the anticorrosion treatment layers 14a and 14b is preferably 0.005 to 0.200 g/m², and more preferably 0.010 to 0.100 g/m². When the mass per unit area is 0.005 g/m² or more, the barrier layer 13 is more likely to have anticorrosion properties. Even if the mass per unit area exceeds 0.200 g/m², there is little change in the anticorrosion properties. When a rare-earth element oxide sol is used and the coating is thick, thermal curing during drying may be insufficient, causing a lower cohesive force. The thickness of the anticorrosion treatment layers 14a and 14b can be converted from their specific gravity.

From the viewpoint that the adhesion between the sealant layer 16 and the barrier layer 13 is more likely to be maintained, for example, the anticorrosion treatment layers 14a and 14b may contain cerium oxide, 1 to 100 parts by mass of phosphoric acid or phosphate with respect to 100 parts by mass of the cerium oxide, and a cationic polymer, or may be formed by applying chemical conversion treatment to the barrier layer 13, or may be formed by applying chemical conversion treatment to the barrier layer 13 and contain a cationic polymer.

### <Second adhesive layer>

The second adhesive layer 12b adheres the barrier layer 13 to the sealant layer 16. The second adhesive layer 12b may be composed of a typical adhesive for adhering the barrier layer 13 to the sealant layer 16.

In the case where the second anticorrosion treatment layer 14b is provided on the barrier layer 13 and includes a layer containing at least one polymer selected from the group consisting of a cationic polymer and an anionic polymer described above, the second adhesive layer 12b preferably contains a compound (hereinafter also referred to as a "reactive compound") having reactivity with the polymer contained in the second anticorrosion treatment layer 14b.

For example, when the second anticorrosion treatment layer 14b contains a cationic polymer, the second adhesive layer 12b contains a compound having reactivity with a cationic polymer. When the second anticorrosion treatment layer 14b contains an anionic polymer, the second adhesive layer 12b contains a compound having reactivity with an anionic polymer. When the second anticorrosion treatment layer 14b contains a cationic polymer and an anionic polymer, the second adhesive layer 12b contains a compound having reactivity with a cationic polymer and a compound having reactivity with an anionic polymer. However, the second adhesive layer 12b may not necessarily contain the two types of compounds, and may contain a compound having reactivity with both a cationic polymer and an anionic polymer. The phrase "having reactivity" with a cationic polymer or an anionic polymer refers to forming a covalent bond with a cationic polymer or an anionic polymer. The second adhesive layer 12b may further contain an acid-modified polyolefin resin.

The compound having reactivity with a cationic polymer may be at least one compound selected from the group consisting of a polyfunctional isocyanate compound, a glycidyl compound, a compound having a carboxy group, and a compound having an oxazoline group.

The polyfunctional isocyanate compound, the glycidyl compound, the compound having a carboxy group, and the compound having an oxazoline group may be a polyfunctional isocyanate compound, a glycidyl compound, a compound having a carboxy group, and a compound having an oxazoline group described above as a crosslinking agent for allowing a cationic polymer to have a crosslinked structure. Of these, a polyfunctional isocyanate compound is preferable in terms of high reactivity with a cationic polymer and easy formation of a crosslinked structure.

The compound having reactivity with an anionic polymer may be at least one compound selected from the group consisting of a glycidyl compound, and a compound having an oxazoline group. The glycidyl compound and the compound having an oxazoline group may be a glycidyl compound and a compound having an oxazoline group described above as a crosslinking agent for allowing a cationic polymer to have a crosslinked structure. Of these, a glycidyl compound is preferable in terms of high reactivity with an anionic polymer.

When the second adhesive layer 12b contains an acid-modified polyolefin resin, the reactive compound preferably also has reactivity with an acidic group (i.e., forms a covalent bond with an acidic group) in the acid-modified polyolefin resin. In such a case, the second adhesive layer 12b has higher adhesion to the second anticorrosion treatment layer 14b. In addition, the acid-modified polyolefin resin has a crosslinked structure, allowing the packaging material 10 to have even higher solvent resistance.

The reactive compound content is preferably 1 to 10 equivalents relative to the acidic group in the acid-modified polyolefin resin. When the reactive compound content is 1 or more equivalents, the reactive compound sufficiently reacts with the acidic group in the acid-modified polyolefin resin. If the reactive compound content exceeds 10 equivalents, a crosslinking reaction with the acid-modified polyolefin resin is sufficiently saturated, and thus the presence of unreacted material may lead to deterioration in various performances. Therefore, for example, the reactive compound content is preferably 5 to 20 parts by mass (solid content ratio) with respect to 100 parts by mass of acid-modified polyolefin resin.

The acid-modified polyolefin resin is obtained by introducing an acidic group into a polyolefin resin. The acidic group may be a carboxy group, a sulfonic acid group, an acid anhydride group, or the like, and is particularly preferably a maleic anhydride group, a (meth)acrylic acid group, or the like. The acid-modified polyolefin resin may be, for example, similar to a modified polyolefin resin used to form the sealant layer 16.

The second adhesive layer 12b may contain various additives such as a flame retardant, a slip agent, an anti-blocking agent, an antioxidant, a photostabilizer, and a tackifier.

The second adhesive layer 12b may contain, for example, acid-modified polyolefin, and at least one curing agent selected from the group consisting of a polyfunctional isocyanate compound, a glycidyl compound, a compound having a carboxy group, a compound having an oxazoline group, and a carbodiimide compound, from the viewpoint of preventing reduction in lamination strength when an electrolyte solution is involved and the viewpoint of further preventing reduction in insulating properties. Examples of the carbodiimide compound include N,N'-di-o-tolylcarbodiimide, N,N'-diphenylcarbodiimide, N,N'-di-2,6-dimethylphenylcarbodiimide, N,N'-bis(2,6-diisopropylphenyl)carbodiimide, N,N'-dioctyldecylcarbodiimide, N-tolyl-N'-cyclohexylcarbodiimide, N,N'-di-2,2-di-t-butylphenylcarbodiimide, N-triyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide, and N,N'-di-p-tolylcarbodiimide.

The adhesive for forming the second adhesive layer 12b may be, for example, a polyurethane adhesive containing polyisocyanate and polyester polyol composed of hydrogenated dimer fatty acid and diol. The adhesive may be a polyurethane resin obtained by allowing a bi- or higher-functional isocyanate compound to act on a base resin such as a polyester polyol, a polyether polyol, an acrylic polyol, or a carbonate polyol, or an epoxy resin obtained by allowing an amine compound or the like to act on a base resin having an epoxy group, and these resins are preferable from the viewpoint of heat resistance.

The thickness of the second adhesive layer 12b is not particularly limited, but is preferably 1 to 10 µm, and more preferably 2 to 7 µm, from the viewpoint of obtaining desired adhesive strength, processability, and the like.

### <Sealant layer 16>

The sealant layer 16 allows the packaging material 10 to have heat sealability, and is heat sealed on the inner side during assembly of the solid-state battery.

The sealant layer 16 may be, for example, a film containing a thermoplastic resin such as a polyolefin resin, a polyester resin, a polycarbonate resin, a polyphenylene ether resin, a polyacetal resin, a polystyrene resin, a polyvinyl chloride resin, or a polyvinyl acetate resin. The sealability and heat resistance can be controlled by blending the above various resins to form a polymer alloy. In particular, a film containing a polyolefin resin (hereinafter also referred to as a "polyolefin film") and a film containing a polyester resin (hereinafter also referred to as a "polyester film") are preferably used. In such a case, the packaging material 10 has better sealability. Furthermore, a polyolefin film and a polyester film have heat resistance; thus, the packaging material 10 allows the solid-state battery to have even higher heat resistance.

Examples of the polyolefin resin include low, medium, and high-density polyethylene, an ethylene-α-olefin copolymer, polypropylene, block and random copolymers containing propylene as a copolymerization component, and a propylene-α-olefin copolymer. The polyolefin resin may be an acid-modified polyolefin resin obtained by modifying a polyolefin resin with acid or glycidyl. When a polyolefin film is directly laminated on the barrier layer 13 without the anticorrosion treatment layer 14b and the second adhesive layer 12b, the polyolefin film preferably includes an acid-modified polyolefin resin layer that contains an acid-modified polyolefin resin and that is directly laminated on the barrier layer 13.

Examples of the polyester resin include a polyethylene terephthalate (PET) resin, a polybutylene terephthalate (PBT) resin, a polyethylene naphthalate (PEN) resin, a polybutylene naphthalate (PBN) resin, and a copolymer thereof. These polyester resins may be used singly or in combination of two or more. Alternatively, a material obtained by copolymerizing acid and glycol may be used.

In order to obtain sealability, heat resistance, and other functionalities, the sealant layer 16 may further contain, for example, additives such as an antioxidant, a slip agent, a flame retardant, an anti-blocking agent, a photostabilizer, a dehydrating agent, a tackifier, a crystal nucleating agent, and a plasticizer.

The melting point of the sealant layer 16 is not particularly limited to, but is preferably 150°C or higher, more preferably 155°C or higher, and still more preferably 160°C or higher. The sealant layer 16 having a melting point of 150°C or higher can prevent reduction in sealing strength of the packaging material 10 when the packaging material 10 is used under high-temperature environmental conditions.

The melting point of the sealant layer 16 is preferably 250°C or lower, more preferably 230°C or lower, and still more preferably 210°C or lower. In such a case, the sealant layer 16 having a melting point of 250°C or lower can achieve a lower heat-sealing temperature. This makes it possible to further prevent generation of air bubbles in the substrate layer 11 during heat sealing. This further prevents the packaging material from having poor formability. This also allows the packaging material 10 to prevent moisture from entering through the packaging material 10.

The term "melting point", as used herein, refers to a "melting peak temperature" obtained in accordance with the method described in JIS K 7121-1987, and when two or more independent melting peaks are observed, the lowest melting peak temperature is adopted.

The sealant layer 16 may be a single-layer film or a multilayer film, and the configuration of the sealant layer 16 may be selected according to the required function. When the sealant layer 16 is a multilayer film, layers of the multilayer film may be laminated by coextrusion, or may be laminated by dry lamination. However, from the viewpoint of interlayer adhesion, the sealant layer 16 as a multilayer film is preferably composed of the same type of resin. For example, layers of the multilayer film may be laminated by placing a layer containing a modified polyolefin resin as a layer in contact with the barrier layer 13, and extruding a single-layer unmodified polyolefin resin layer onto the layer or coextruding a multilayer polyolefin resin layer onto the layer.

The thickness of the sealant layer 16 is not particularly limited, but is preferably 10 to 100 µm, and more preferably 20 to 60 µm. A sealant layer 16 having a thickness of 10 µm or more can achieve sufficient sealing strength. A sealant layer 16 having a thickness of 100 µm or less leads to a smaller amount of water vapor entering from an edge portion of the packaging material 10.

A preferred embodiment of the solid-state battery packaging material of the present embodiment has been described in detail; however, the present disclosure is not limited to such a specific embodiment.

For example, Fig. 1 shows the solid-state battery packaging material in which the anticorrosion treatment layers 14a and 14b are provided on the respective surfaces of the barrier layer 13. However, only one of the anticorrosion treatment layers 14a and 14b may be provided, or no anticorrosion treatment layer may be provided.

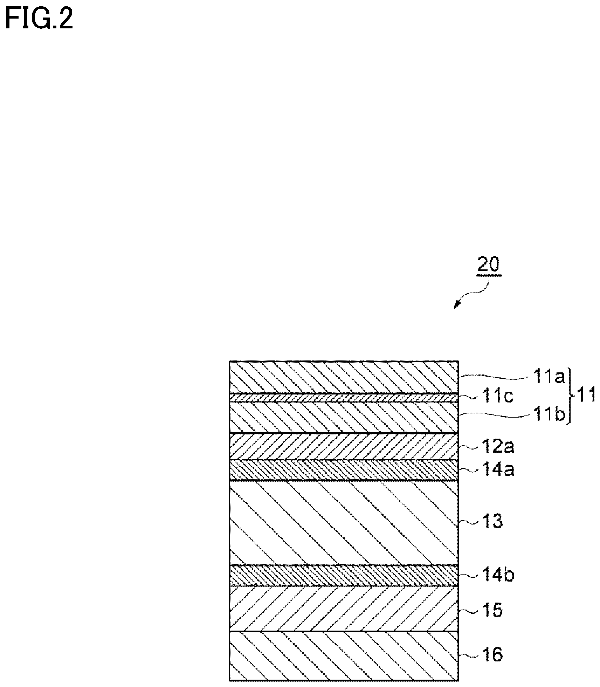

Fig. 1 shows the solid-state battery packaging material in which the second adhesive layer 12b is used to laminate the barrier layer 13 and the sealant layer 16. However, an adhesive resin layer 15 may be used to laminate the barrier layer 13 and the sealant layer 16, as in a solid-state battery packaging material 20 shown in Fig. 2. In the solid-state battery packaging material 20 shown in Fig. 2, the second adhesive layer 12b may be provided between the barrier layer 13 and the adhesive resin layer 15.

### <Adhesive resin layer 15>

The adhesive resin layer 15 contains an adhesive resin composition as a main component, and if necessary, an additive component. The adhesive resin composition is not particularly limited, but preferably contains a modified polyolefin resin.

The modified polyolefin resin is preferably a polyolefin resin graft modified with an unsaturated carboxylic acid derivative derived from any of an unsaturated carboxylic acid, an acid anhydride thereof, and an ester thereof.

Examples of the polyolefin resin include low-density polyethylene, medium-density polyethylene, high-density polyethylene, an ethylene-α-olefin copolymer, homopolypropylene, block polypropylene, random polypropylene, and a propylene-α-olefin copolymer.

The modified polyolefin resin is preferably a polyolefin resin modified with maleic anhydride. Examples of suitable modified polyolefin resins include "Admer" manufactured by Mitsui Chemicals, Inc., and "Modic" manufactured by Mitsubishi Chemical Corporation. Such a modified polyolefin resin has high reactivity with various metals and polymers having various functional groups, and the reactivity allows the adhesive resin layer 15 to have adhesion. If necessary, the adhesive resin layer 15 may contain, for example, various additives such as various compatible and incompatible elastomers, flame retardants, slip agents, anti-blocking agents, antioxidants, photostabilizers, and tackifiers.

The thickness of the adhesive resin layer 15 is not particularly limited, but is preferably less than or equal to that of the sealant layer 16, from the viewpoint of stress relaxation and moisture transmission.

In the solid-state battery packaging material 20, the total thickness of the adhesive resin layer 15 and the sealant layer 16 is preferably in the range of 5 to 100 µm, and more preferably in the range of 20 to 80 µm, from the viewpoint of achieving both a small thickness and higher heat-sealing strength under high-temperature environmental conditions.

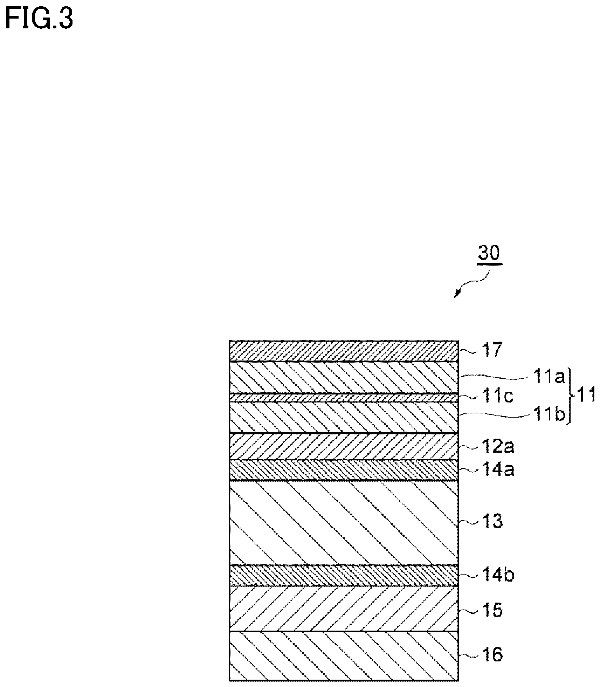

As a solid-state battery packaging material 30 shown in Fig. 3, the packaging material of the present disclosure may further include a modified layer 17 that is provided on the surface of the substrate layer 11 facing away from the barrier layer 13. In Fig. 3, the adhesive resin layer 15 may be the second adhesive layer 12b.

### <Modified layer 17>

In the case where films having high wettability (e.g., polyester films) are used as a substrate layer, smearing is more likely to occur when a barcode for lot tracing is printed using an ink-jet printer after production of the battery. This makes it difficult to read the barcode. The modified layer 17 provided on the substrate layer 11 can address such a problem. The modified layer 17 contains a silicone resin, and can be formed by applying, onto the substrate layer 11, a coating liquid obtained by diluting silicone oil with a solvent. The coating liquid may contain a lubricant based on an amide such as erucamide to achieve better formability. The modified layer 17 may serve as a protective layer composed of the same material as that of the first adhesive layer 12a.

### [Method of producing packaging material]

Next, an example of a method of producing the packaging material 10 shown in Fig. 1 will be described. The method of producing the packaging material 10 is not limited to the following method.

The method of producing the packaging material 10 of the present embodiment includes a step of forming the anticorrosion treatment layers 14a and 14b on the barrier layer 13, a step of bonding the substrate layer 11 to the barrier layer 13 using the first adhesive layer 12a, a step of further laminating the sealant layer 16 via the second adhesive layer 12b to prepare a laminate, and if necessary, a step of aging the obtained laminate.

### (Step of laminating anticorrosion treatment layers on barrier layer)

In this step, the anticorrosion treatment layers 14a and 14b are formed on the barrier layer 13. As described above, the anticorrosion treatment layers 14a and 14b may be formed on the barrier layer 13 by applying degreasing treatment, hydrothermal conversion treatment, anodic oxidation treatment, or chemical conversion treatment to the barrier layer 13, or applying a coating agent having anticorrosion performance to the barrier layer 13.

The anticorrosion treatment layers 14a and 14b as a multilayer may be formed, for example, by applying, to the barrier layer 13, a coating liquid (coating agent) for forming an anticorrosion treatment layer on the lower side (the barrier layer 13 side), and baking the coating agent to form a first layer, and then applying, to the first layer, a coating liquid (coating agent) for forming an anticorrosion treatment layer on the upper side, and baking the coating agent to form a second layer.

The degreasing treatment may be performed by spraying or immersion. The hydrothermal conversion treatment and the anodic oxidation treatment may be performed by immersion. The chemical conversion treatment may be performed by a method appropriately selected from immersion, spraying, coating, and the like, according to the type of chemical conversion treatment.

The coating agent having anticorrosion performance may be applied using various coating methods such as gravure coating, reverse coating, roll coating, or bar coating.

As described above, various treatments may be applied to one or both surfaces of the metal foil. When treatment is applied to one surface of the metal foil, the treatment is preferably applied to the surface of the metal foil on the side on which the sealant layer 16 is to be laminated. If necessary, the treatment may also be applied to the surface of the substrate layer 11.

The amounts of coating agents for forming the first and second layers are preferably both 0.005 to 0.200 g/m², and more preferably 0.010 to 0.100 g/m².

If necessary, dry curing may be performed at a base material temperature in the range of 60 to 300°C according to the drying conditions for the anticorrosion treatment layers 14a and 14b used.

### (Step of bonding substrate layer to barrier layer)

In this step, the substrate layer 11 is bonded via the first adhesive layer 12a to the barrier layer 13 provided with the anticorrosion treatment layers 14a and 14b. The bonding is performed using a method such as dry lamination, non-solvent lamination, or wet lamination to bond the layers with the material for forming the first adhesive layer 12a described above. The first adhesive layer 12a is provided so that the dry coating amount of the first adhesive layer 12a is in the range of 1 to 10 g/m², and more preferably in the range of 2 to 7 g/m². As the substrate layer 11, a laminate film is prepared in advance by bonding resin films to each other using the substrate adhesive layer 11c by the same bonding method as described above.

A step of selecting a resin film is preferably performed prior to the bonding step. Specifically, the step of selecting a resin film is a step in which the water content of resin films stored in an environment at 23°C and 50% RH for 2 days is measured and a film having a water content of 4000 mass ppm or less is selected as an inner layer side resin film that is laminated at a position closer to the inner layer side than the resin film 11a is. This step makes it possible to determine the extent to which moisture is absorbed by the resin film; thus, generation of air bubbles in the substrate layer 11 during heat sealing at high temperature is more likely to be prevented.

### (Step of laminating second adhesive layer and sealant layer)

In this step, the sealant layer 16 is bonded via the second adhesive layer 12b to the surface of the barrier layer 13 on the second anticorrosion treatment layer 14b side. The bonding may be performed by a method such as a wet process or dry lamination.

In the wet process, a solution or a dispersion of the adhesive for forming the second adhesive layer 12b is applied onto the second anticorrosion treatment layer 14b, and the solvent is evaporated at a predetermined temperature and dried to form a film, followed by baking if necessary. Then, the sealant layer 16 is laminated to produce the packaging material 10. The adhesive may be applied by any of the various coating methods described above. The preferred dry coating amount of the second adhesive layer 12b is the same as that of the first adhesive layer 12a.

In this case, for example, a sealant layer forming resin composition containing the components of the sealant layer 16 described above may be used to form the sealant layer 16 using a melt extrusion molding machine. The processing speed of the melt extrusion molding machine may be 80 m/min or more, from the viewpoint of productivity.

### (Aging step)

In this step, the laminate is aged (cured). Aging of the laminate can promote adhesion between the barrier layer 13, the second anticorrosion treatment layer 14b, the second adhesive layer 12b, and the sealant layer 16. The laminate may be aged at a temperature in the range of room temperature to 100°C. The aging time is, for example, 1 to 10 days.

In this manner, the packaging material 10 of the present embodiment as shown in Fig. 1 can be produced.

Next, an example of a method of producing the packaging material 20 shown in Fig. 2 will be described. The method of producing the packaging material 20 is not limited to the following method.

The method of producing the packaging material 20 of the present embodiment includes a step of forming the anticorrosion treatment layers 14a and 14b on the barrier layer 13, a step of bonding the substrate layer 11 to the barrier layer 13 using the first adhesive layer 12a, a step of further laminating the adhesive resin layer 15 and the sealant layer 16 to prepare a laminate, and if necessary, a step of heat treating the obtained laminate. The steps up to the step of bonding the substrate layer 11 to the barrier layer 13 can be performed in the same manner as in the method of producing the packaging material 10 described above.

### (Step of laminating adhesive resin layer and sealant layer)

In this step, the adhesive resin layer 15 and the sealant layer 16 are formed on the second anticorrosion treatment layer 14b formed in the earlier step. The adhesive resin layer 15 and the sealant layer 16 may be formed by sandwich lamination of the adhesive resin layer 15 together with the sealant layer 16 using an extrusion laminator. Alternatively, the adhesive resin layer 15 and the sealant layer 16 may be laminated by tandem lamination or coextrusion in which the adhesive resin layer 15 and the sealant layer 16 are extruded. When the adhesive resin layer 15 and the sealant layer 16 are formed, for example, the components are mixed so that the adhesive resin layer 15 and the sealant layer 16 are configured as described above. The sealant layer forming resin composition described above is used to form the sealant layer 16.

In this step, a laminate is obtained in which the substrate layer 11, the first adhesive layer 12a, the first anticorrosion treatment layer 14a, the barrier layer 13, the second anticorrosion treatment layer 14b, the adhesive resin layer 15, and the sealant layer 16 are laminated in this order as shown in Fig. 2.

The adhesive resin layer 15 may be laminated by preparing materials dry blended according to the material formulation described above, and directly extruding the materials using an extrusion laminator. Alternatively, the adhesive resin layer 15 may be laminated by preparing granules obtained in advance by melt blending using a melt-kneading device such as a single-screw extruder, a twin-screw extruder, or a Brabender mixer, and extruding the granules using an extrusion laminator.

The sealant layer 16 may be laminated by preparing materials dry blended according to the material formulation described above as components of the sealant layer forming resin composition, and directly extruding the materials using an extrusion laminator. Alternatively, the adhesive resin layer 15 and the sealant layer 16 may be laminated by preparing granules obtained in advance by melt blending using a melt-kneading device such as a single-screw extruder, a twin-screw extruder, or a Brabender mixer, and extruding the granules as the adhesive resin layer 15 and the sealant layer 16 using an extrusion laminator by tandem lamination or coextrusion. Alternatively, the adhesive resin layer 15 and the sealant layer 16 may be laminated by forming a single-layer sealant film as a cast film in advance using a sealant layer forming resin composition, and performing sandwich lamination of the film together with an adhesive resin. The adhesive resin layer 15 and the sealant layer 16 may be formed, for example, at a speed (processing speed) of 80 m/min or more, from the viewpoint of productivity.

### (Heat treatment step)

In this step, the laminate is heat treated. Heat treatment of the laminate can improve the adhesion between the barrier layer 13, the second anticorrosion treatment layer 14b, the adhesive resin layer 15, and the sealant layer 16. In the heat treatment, the laminate is preferably heat treated at a temperature of not less than the melting point of the adhesive resin layer 15.

In this manner, the packaging material 20 of the present embodiment as shown in Fig. 2 can be produced.

### [Solid-state battery]

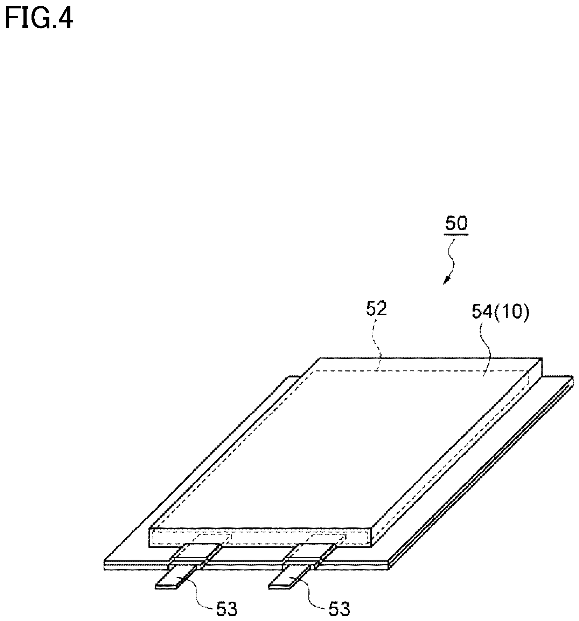

Fig. 4 is a perspective view of an embodiment of a solid-state battery produced using the packaging material 10 described above. As shown in Fig. 4, a solid-state battery 50 includes a battery body 52 containing a solid electrolyte, two metal terminals (current output terminals) 53 for externally outputting an electric current from the battery body 52, and a packaging bag 54 in which the battery body 52 is sealed. The packaging bag 54 is obtained by heat sealing the packaging material 10 according to the present embodiment described above, and is used as a container for housing the battery body 52. In the packaging material 10, the substrate layer 11 is the outermost layer, and the sealant layer 16 is the innermost layer. Thus, the packaging material 10 in which the battery body 52 is housed is formed by folding a single laminate film in two or stacking two laminate films so that the substrate layer 11 faces the outside of the solid-state battery 50 and the sealant layer 16 faces the inside of the solid-state battery 50, followed by heat sealing of edge portions of the laminate film or the two laminate films. The metal terminals 53 are held by the packaging bag 54 in which the sealant layer 16 is located on the inner side. The metal terminals 53 may be held by the packaging bag 54 via a tab sealant.

Before heat sealing of the packaging material 10, a confirmation step and an adjustment step may be performed. The confirmation step is a step of confirming that the water content of the resin film 11b, laminated at a position closer to the inner layer side than the resin film 11a is, is 4000 mass ppm or less, and the adjustment step is a step of adjusting the water content of the resin film 11b to 4000 mass ppm or less when the water content is not 4000 mass ppm or less. The water content can be adjusted by varying the storage temperature and humidity and storage time of the packaging material 10. Thus, generation of air bubbles in the substrate layer 11 during heat sealing at high temperature is more likely to be further prevented.

The battery body 52 includes at least one power generation element composed of a positive electrode, a solid electrolyte, and a negative electrode. The metal terminals 53 are a part of a current collector protruding externally from the packaging material 10, and are composed of a metal foil such as a copper foil or an aluminum foil. Examples of the solid electrolyte include an oxide solid electrolyte and a sulfide solid electrolyte.

The conditions for heat-sealing the packaging material 10 can be adjusted by varying the material for forming the sealant layer. For example, when the melting point of the sealant layer is 150°C or higher, the packaging material 10 can be heat sealed at 180 to 230°C for 2 to 20 seconds. In the packaging material 10, generation of air bubbles in the substrate layer 11 during heat sealing is prevented. Thus, in the solid-state battery 50, reduction in adhesion between the resin films constituting the substrate layer is prevented. Furthermore, the substrate layer is a multilayer film, and thus the substrate layer itself has higher strength. Therefore, even when the solid-state battery 50 is used under high-temperature environmental conditions and the battery body 52 expands so that a force acts to open the packaging bag 54, the solid-state battery 50 can maintain the reliability of the packaging material 10.

### [Examples]

In the following, the present disclosure will be more specifically described by way of examples. However, the present disclosure is not limited to the following examples.

### <Materials used>

Materials used in the examples and comparative examples are as follows.

### (Substrate layer)

As a substrate layer, the following resin films (biaxially stretched films) were used. Polyethylene terephthalate film (PET, thickness: 25 µm, film A): Manufactured by Unitika Ltd., easily formable PET film, water content: 2913 mass ppm, CO₂ transmittance: 74 ml·mm/m²·d·MPa
Polybutylene terephthalate film (PBT, thickness: 25 µm, film B): Manufactured by Kohjin Film & Chemicals Co., Ltd., BOBLET (product name), water content: 1648 mass ppm, CO₂ transmittance: 70 ml·mm/m²·d·MPa
Polyamide film (PA (Ny6), thickness: 25 µm, film C): Manufactured by Toyobo Co., Ltd., HARDEN N1102 (product name), water content: 23728 mass ppm, CO₂ transmittance: 50 ml·mm/m²·d·MPa

The water content was measured in the following manner. That is, 10 cm ×10 cm pieces were cut out from each resin film stored in an environment at 23°C and 50% RH for 2 days. The film pieces were placed and heated in an evaporation heating device (manufactured by HIRANUMA Co., Ltd., EV-2000) set to 300°C, and the amount of generated water was measured for 30 minutes using a Karl Fischer device (manufactured by HIRANUMA Co., Ltd., AQ-2100). At that time, dry N₂ gas was used as carrier gas. The amount of water measured was used to calculate the water content based on the following equation.$Water content \left(mass ppm\right) = \left(Amount of water measured \left(g\right)/Mass of film \left(g\right)\right) \times {10}^{6}$

Furthermore, the CO₂ transmittance of the film pieces was measured in accordance with JIS K 7126.

### (Substrate adhesive layer and first adhesive layer)

As a substrate adhesive layer and a first adhesive layer, a polyester urethane adhesive (manufactured by Toyo-Morton, Ltd.) was used. The polyester urethane adhesive was obtained by adding tolylene diisocyanate (TDI, CAT-10L), hexamethylene diisocyanate (HDI, SP curing agent), or tolylene diisocyanate (TDI) and isophorone diisocyanate (IPDI, CAT-RT1) as a curing agent to a polyester polyol base resin.

### (First anticorrosion treatment layer and second anticorrosion treatment layer)

A first anticorrosion treatment layer (substrate layer side) and a second anticorrosion treatment layer (sealant layer side) were formed using the following materials (CL-1) and (CL-2).
(CL-1): A sodium polyphosphate-stabilized cerium oxide sol in which the solid content concentration was adjusted to 10 mass% using distilled water as a solvent. The sodium polyphosphate-stabilized cerium oxide sol contained 10 parts by mass of Na salt of phosphoric acid with respect to 100 parts by mass of cerium oxide.
(CL-2): A composition in which the solid content concentration was adjusted to 5 mass% using distilled water as a solvent. In the composition, the mass ratio between "polyallylamine (manufactured by Nitto Boseki Co., Ltd.)" and "polyglycerol polyglycidyl ether (manufactured by Nagase Chemtex Corporation)" was 90 : 10.

### (Barrier layer)

As a barrier layer, an annealed and degreased soft aluminum foil (manufactured by Toyo Aluminium K.K., trade name: 8079, thickness: 40 µm) was used.

### (Adhesive resin layer)

As an adhesive resin layer, a polypropylene resin (thickness: 27 µm, melting point: 164°C) modified with maleic anhydride was used.

### (Sealant layer)

As a sealant layer, a polypropylene film (thickness: 53 µm, melting point: 164°C) was used.

### (Modified layer)

To form a modified layer, polyether-modified silicone oil (manufactured by Shin-Etsu Chemical Co., Ltd., KF-351A) was used.

### (Example 1)

First, a first anticorrosion treatment layer and a second anticorrosion treatment layer were formed on a barrier layer by the following procedure. That is, first, the material (CL-1) was applied to each of both surfaces of the barrier layer by micro gravure coating so that the dry coating amount of the material (CL-1) was 70 mg/m², followed by baking at 200°C in a drying unit. Then, onto the obtained layer, the material (CL-2) was applied by micro gravure coating so that the dry coating amount of the material (CL-2) was 20 mg/m². Thus, composite layers composed of the materials (CL-1) and (CL-2) were formed as the first and second anticorrosion treatment layers on the respective both surfaces of the barrier layer, thereby obtaining a laminate. The two materials (CL-1) and (CL-2) were combined to form the composite layers having anticorrosion performance.

Next, the PET films (films A) that were resin films as a substrate layer were bonded to each other using a polyurethane adhesive (substrate adhesive layer) obtained by adding **TDI** and **IPDI** as a curing agent to the polyester polyol base resin, thereby obtaining a substrate layer. Specifically, the polyurethane adhesive was applied to one surface of one of the PET films so that the thickness of the polyurethane adhesive after curing was 4 µm, and dried at 80°C for 1 minute, followed by lamination with the other PET film and aging at 80°C for 120 hours, thereby obtaining a substrate layer.

The surface on the first anticorrosion treatment layer side of the barrier layer provided with the first anticorrosion treatment layer and the second anticorrosion treatment layer was bonded to the substrate layer using a polyurethane adhesive (first adhesive layer) by dry lamination, thereby obtaining a laminate of the barrier layer and the substrate layer. Specifically, the polyurethane adhesive was applied onto the surface of the barrier layer on the first anticorrosion treatment layer side so that the thickness of the polyurethane adhesive after curing was 5 µm, and dried at 80°C for 1 minute, followed by lamination with the substrate layer and aging at 60°C for 120 hours, thereby obtaining a laminate.

Then, the laminate of the barrier layer and the substrate layer was placed in an unwinding unit of an extrusion laminator, and sandwich lamination of an adhesive resin layer together with a sealant layer was performed.

The structure obtained in this manner was heat treated so that the maximum temperature reached by the structure was 200°C, thereby obtaining a laminate of the substrate layer, the barrier layer, and the sealant layer.

Then, the substrate layer of the laminate of the substrate layer, the barrier layer, and the sealant layer was coated with a coating liquid containing the polyether-modified silicone oil, thereby forming a modified layer. Specifically, the silicone oil was applied to the substrate layer so that the coating amount of silicone oil was 1.2 mg/m², and dried at 40°C for 1 minute. Thus, a packaging material (a laminate of the modified layer, the substrate layer, the first adhesive layer, the first anticorrosion treatment layer, the barrier layer, the second anticorrosion treatment layer, the adhesive resin layer, and the sealant layer) was prepared.

### (Other examples and comparative examples)

A packaging material of each of the other examples and the comparative examples was prepared in the same manner as in Example 1, except that the configuration of the substrate layer, the composition and thickness of the substrate adhesive layer, and the presence of the modified layer were varied as shown in Table 1. In Table 1, the thickness of the substrate layer indicates the thickness of the resin films only in which the thickness of the substrate adhesive layer is not included.

**[Table 1]**

| | Configuration of substrate layer | | | | | | | | | |
|---|---|---|---|---|---|---|---|---|---|---|
| | Resin films | | | | | Total thickness of substrate layer (µm) | Substrate adhesive layer | | | Presence of modified layer |
| | Surface layer side >>> Barrier layer side | | | | | | Base resin | Curing agent | Thickness (µm) | |
| Example 1 | A | A | - | - | - | 50 | Polyester polyol | TDI + IPDI | 4 | Present |
| Example 2 | A | A | A | A | - | 100 | Polyester polyol | TDI + IPDI | 4 | Present |
| Example 3 | A | A | A | A | A | 125 | Polyester polyol | TDI + IPDI | 4 | Present |
| Example 4 | A | A | A | A | - | 100 | Polyester polyol | TDI + IPDI | 1 | Present |
| Example 5 | A | A | A | A | - | 100 | Polyester polyol | TDI + IPDI | 10 | Present |
| Example 6 | A | A | A | A | - | 100 | Polyester polyol | TDI + IPDI | 11 | Present |
| Example 7 | A | B | - | - | - | 50 | Polyester polyol | TDI + IPDI | 4 | Present |
| Example 8 | B | A | - | - | - | 50 | Polyester polyol | TDI + IPDI | 4 | Present |
| Example 9 | A | A | - | - | - | 50 | Polyester polyol | TDI | 4 | Present |
| Example 10 | A | A | - | - | - | 50 | Polyester polyol | HDI | 4 | Present |
| Example 11 | A | A | - | - | - | 50 | Polyester polyol | TDI + IPDI | 4 | Not present |
| Comparative Example 1 | A | - | - | - | - | 25 | Polyester polyol | TDI + IPDI | 4 | Present |
| Comparative Example 2 | A | C | - | - | - | 50 | Polyester polyol | TDI + IPDI | 4 | Present |
| Comparative Example 3 | C | C | C | C | - | 100 | Polyester polyol | TDI + IPDI | 4 | Present |

### <Evaluation of packaging material>

The packaging materials obtained in the examples and comparative examples were evaluated in the following manner. The results are shown in Table 2.

### (Formability)

Samples with a size of 120 mm × 200 mm (200 mm in MD direction) were cut out from each of the packaging materials. The samples were subjected to forming with a 6 mm forming depth 10 times under the following conditions, and visually observed to determine whether pinholes or cracking occurred. The observation results were evaluated as follows.
Grade A: No pinholes and/or cracks were observed in any of the formed samples.
Grade B: A pinhole and/or a crack was observed in one or more of the formed samples.

### (Conditions)

Die conditions (unit: mm): Blank: 120 × 200, forming area: 80 × 70 (70 in MD direction), corner radius: 1, punch radius: 1, die radius: 1
Forming conditions: Pressing pressure: 0.8 MPa
Forming position: A forming region with a size of 80 mm × 70 mm (70 mm in MD direction) was provided at a position 30 mm from one of the short sides of the samples and 20 mm from one of the long sides of the samples.

### (Lifting in substrate layer after heat sealing)

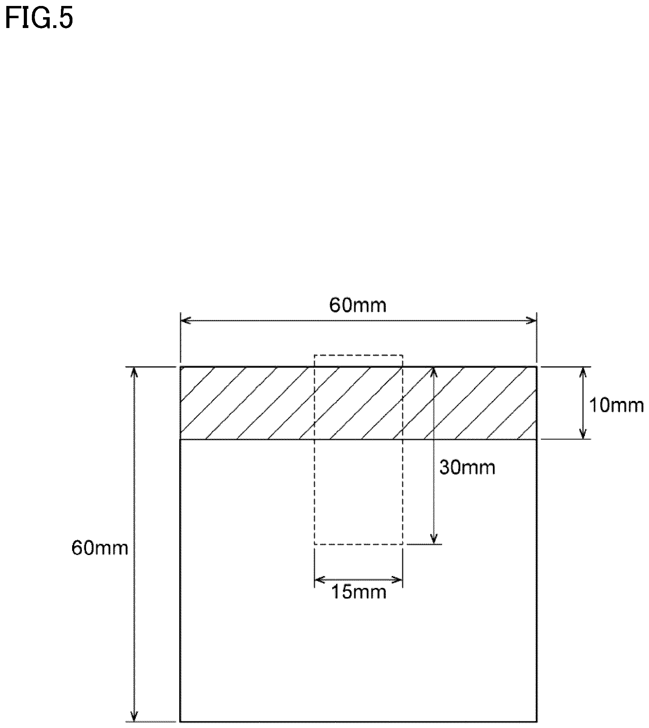

A piece with a size of 120 mm × 60 mm was cut out from each of the packaging materials, and folded in half so that the sealant layer was located on the inner side, and both ends of the packaging material piece in the longitudinal direction were overlapped. Then, while a pressure of 0.5 MPa was applied to both ends, the ends were heat sealed at a temperature of 200°C for 10 seconds to form a heat sealed portion (a portion with diagonal lines in Fig. 5) with a width of 10 mm, thereby preparing a structure. Then, the structure was stored at room temperature for 24 hours. The heat sealed portion was visually observed, and the observation results were evaluated as follows.
Grade A: No lifting was observed in the substrate layer.
Grade B: Lifting was observed in the substrate layer.

### (Foaming in adhesive layer after aging)

The packaging materials were placed in an oven, and aged at 80°C for 120 hours. Then, the appearance of each of the packaging materials was observed using a loupe with 10 times magnification, and the observation results were evaluated as follows.
Grade A: No foaming was observed.
Grade B: Foaming was observed.

### (Heat sealing strength)

A piece with a size of 120 mm × 60 mm was cut out from each of the packaging materials, and folded in half so that the sealant layer was located on the inner side, and both ends of the packaging material piece in the longitudinal direction were overlapped. Then, while a pressure of 0.5 MPa was applied to both ends, the ends were heat sealed at a temperature of 200°C for 5 seconds or 10 seconds to form a heat sealed portion (a portion with diagonal lines in Fig. 5) with a width of 10 mm, thereby preparing a structure. Then, the structure was stored at room temperature for 24 hours. Then, from the structure, a center portion of the heat sealed portion in the longitudinal direction with a size of 15 mm (width) × 30 mm was cut out (see Fig. 5), thereby preparing an evaluation sample. The evaluation samples were used to measure heat sealing strength. The measurement was performed in the following manner. That is, a margin of each sample was held with a chuck using a tensile tester, and then the sample was stretched at a speed of 50 m/min, and the maximum strength obtained at that time was determined as heat sealing strength. The obtained results were evaluated as follows.
Grade A: The heat sealing strength was 50 N/15 mm or more both when the heat sealing time was 5 seconds and when the heat sealing time was 10 seconds.
Grade B: Although the heat sealing strength was less than 50 N/15 mm when the heat sealing time was 5 seconds, the heat sealing strength was 50 N/15 mm or more when the heat sealing time was 10 seconds.

### (Discoloration of formed samples under high-temperature environmental conditions)

Formed samples were obtained in the same manner as the formed samples prepared for the evaluation of "formability" described above, except that the forming depth was 4.4 mm. The formed samples were placed in an oven, and stored at 110°C for 4 weeks. Then, the appearance of each of the formed samples was visually observed, and the observation results were evaluated as follows.
Grade A: No discoloration was observed after the formed sample was placed in the oven.
Grade B: Discoloration was observed after the formed sample was placed in the oven.

### (Lifting in substrate layer of formed samples under high-temperature environmental conditions)

Formed samples were obtained in the same manner as the formed samples prepared for the evaluation of "formability" described above, except that the forming depth was 4.4 mm. The formed samples were placed in an oven, and stored at 110°C or 150°C for 4 weeks. Then, the appearance of each of the formed samples was visually observed, and the observation results were evaluated as follows.
Grade A: No lifting was observed in the substrate layer even when the storage temperature was 150°C.
Grade B: Although lifting was observed in the substrate layer when the storage temperature was 150°C, no lifting was observed in the substrate layer when the storage temperature was 110°C.

### (Readability of barcode)

A two-dimensional barcode was printed on the surface layer of the substrate layer (on the modified layer in the case of the packaging material including the modified layer) using an ink-jet printer 9040 (M-head) manufactured by Markem-Imaje. The readability of the barcode using a barcode reader was evaluated as follows.
Grade A: The barcode was read in less than 1 second.
Grade B: The barcode was read in 1 to 5 seconds.

**[Table 2]**

| | Evaluation results | | | | | | |
|---|---|---|---|---|---|---|---|
| | Formability | Lifting in substrate layer after heat sealing | Foaming in adhesive layer after aging | Heat sealing strength | Discoloration of formed samples under high temperature environmental conditions | Lifting in formed samples under high temperature environmental conditions | Readability of barcode |
| Example 1 | A | A | A | A | A | A | A |
| Example 2 | A | A | A | A | A | A | A |
| Example 3 | A | A | B | B | A | A | A |
| Example 4 | A | A | A | A | A | A | A |
| Example 5 | A | A | A | A | A | A | A |
| Example 6 | A | A | B | B | A | A | A |
| Example 7 | A | A | A | A | A | A | A |
| Example 8 | A | A | A | A | A | A | A |
| Example 9 | A | A | A | A | A | B | A |
| Example 10 | A | A | A | A | A | B | A |
| Example 11 | A | A | A | A | A | A | B |
| Comparative Example 1 | B | A | A | A | A | A | A |
| Comparative Example 2 | A | B | A | A | B | A | A |
| Comparative Example 3 | A | B | B | A | B | A | A |

The results shown in Table 1 indicate that the packaging materials of the examples in which the substrate layer was composed of at least two resin films having a water content of 4000 mass ppm or less had good formability and prevented the occurrence of lifting in the substrate layer during heat sealing.

### [Reference Signs List]

10, 20, 30 ... Solid-state battery packaging material
11 ... Substrate layer
11a, 11b ... Resin film
11c ... Substrate adhesive layer
12a ... First adhesive layer
12b ... Second adhesive layer
13 ... Barrier layer
14a ... First anticorrosion treatment layer
14b ... Second anticorrosion treatment layer
15 ... Adhesive resin layer
16 ... Sealant layer
17 ... Modified layer
50 ... Solid-state battery
52 ... Battery body
53 ... Metal terminal
54 ... Packaging bag

## Claims

1. A solid-state battery packaging material (10, 20, 30) comprising at least a substrate layer (11), a barrier layer (13), and a sealant layer (16) in this order, wherein
the substrate layer (11) includes at least two biaxially stretched resin films (11a, 11b),
**characterized in that**
one or more of the at least two resin films other than an outermost layer have a water content of 4000 mass ppm or less, and
the at least two resin films (11a, 11b) are adhered to each other via an adhesive layer (11c), the adhesive layer (11c) containing a polyester urethane resin, which is a reaction product of polyester polyol and isocyanate,
wherein the water content is measured as described in the description.

2. The solid-state battery packaging material (10, 20, 30) according to claim 1, wherein the substrate layer (11) has a thickness of 24 to 100 µm.

3. The solid-state battery packaging material (10, 20, 30) according to claim 1 or 2, wherein the adhesive layer (11c) has a thickness of 1 to 10 µm.

4. The solid-state battery packaging material (10, 20, 30) according to any one of claims 1 to 3, wherein the at least two resin films (11a, 11b) are polyester films containing a polyester resin.

5. The solid-state battery packaging material (10, 20, 30) according to claim 1, wherein a CO₂ transmittance of the at least two resin films (11a, 11b) that is measured in accordance with JIS K 7126 is 60 ml·mm/m²·d·MPa or more.

6. The solid-state battery packaging material (10, 20, 30) according to any one of claims 1 to 5, wherein the sealant layer (16) has a melting point of 150°C or higher.

7. The solid-state battery packaging material according to any one of claims 1 to 6, further comprising a modified layer that contains a silicone resin and is provided on the substrate layer (11).

8. A solid-state battery (50) comprising:
a battery body (52) that contains a solid electrolyte; and
a packaging bag (54) that houses the battery body (52), wherein
the packaging bag (54) is a packaging bag obtained by heat sealing the solid-state battery packaging material (10, 20, 30) according to any one of claims 1 to 7.

## Patentansprüche

1. Festkörperbatterie-Verpackungsmaterial (10, 20, 30), das mindestens eine Substratschicht (11), eine Barriereschicht (13) und eine Abdichtschicht (16) in dieser Reihenfolge umfasst, in dem
die Substratschicht (11) mindestens zwei biaxial verstreckte Harzfolien (11a, 11b) einschließt,
**dadurch gekennzeichnet, dass**
eine oder mehrere der mindestens zwei Harzfolien mit Ausnahme einer Schicht ganz außen einen Wassergehalt von 4.000 Massen-ppm oder weniger haben und
die mindestens zwei Harzfolien (11a, 11b) über eine Klebeschicht (11c) aneinandergeklebt sind, wobei die Klebeschicht (11c) ein Polyester-Urethan-Harz, das ein Reaktionsprodukt von Polyesterpolyol und Isocyanat ist, enthält
wobei der Wassergehalt wie in der Beschreibung beschrieben gemessen wird.

2. Festkörperbatterie-Verpackungsmaterial (10, 20, 30) gemäß Anspruch 1, in dem die Substratschicht (11) eine Dicke von 24 bis 100 µm besitzt.

3. Festkörperbatterie-Verpackungsmaterial (10, 20, 30) gemäß Anspruch 1 oder 2, in dem die Klebeschicht (11c) eine Dicke von 1 bis 10 µm besitzt.

4. Festkörperbatterie-Verpackungsmaterial (10, 20, 30) gemäß mindestens einem der Ansprüche 1 bis 3, in dem die mindestens zwei Harzfolien (11a, 11b) Polyesterfolien, die ein Polyesterharz enthalten, sind.

5. Festkörperbatterie-Verpackungsmaterial (10, 20, 30) gemäß Anspruch 1, in dem eine CO₂-Durchlässigkeit der mindestens zwei Harzfolien (11a, 11b), die in Übereinstimmung mit JIS K 7126 gemessen wird, 60 ml·mm/m²·d·MPa oder mehr ist.

6. Festkörperbatterie-Verpackungsmaterial (10, 20, 30) gemäß mindestens einem der Ansprüche 1 bis 5, in dem die Abdichtschicht (16) einen Schmelzpunkt von 150°C oder höher besitzt.

7. Festkörperbatterie-Verpackungsmaterial gemäß mindestens einem der Ansprüche 1 bis 6, das zusätzlich eine modifizierte Schicht umfasst, die ein Silikonharz enthält und auf der Substratschicht (11) vorgesehen ist.

8. Festkörperbatterie (50), die folgendes umfasst:
einen Batteriekörper (52), der einen festen Elektrolyten enthält; und
einen Verpackungsbeutel (54), der den Batteriekörper (52) aufnimmt, wobei
der Verpackungsbeutel (54) ein Verpackungsbeutel ist, der erhalten wird durch Heißversiegeln des Festkörperbatterie-Verpackungsmaterials (10, 20, 30) gemäß mindestens einem der Ansprüche 1 bis 7.

## Revendications

1. Matériau d'emballage (10, 20, 30) de batterie tout-solide comprenant au moins une couche (11) de substrat, une couche barrière (13) et une couche d'étanchéité (16) dans cet ordre, dans lequel
la couche (11) de substrat inclut au moins deux films (11a, 11b) de résine étirés biaxialement,
**caractérisé en ce que**
un ou plusieurs des au moins deux films de résine autres qu'une couche la plus extérieure présentent une teneur en eau de 4 000 ppm en masse ou moins, et
les au moins deux films (11a, 11b) de résine adhèrent l'un à l'autre via une couche adhésive (11c), la couche adhésive (11c) contenant une résine de polyesteruréthane, qui est un produit réactionnel de polyester polyol et d'isocyanate,
dans lequel la teneur en eau est mesurée comme décrit dans la description.

2. Matériau d'emballage (10, 20, 30) de batterie tout-solide selon la revendication 1, dans lequel la couche (11) de substrat présente une épaisseur de 24 à 100 µm.

3. Matériau d'emballage (10, 20, 30) de batterie tout-solide selon la revendication 1 ou la revendication 2, dans lequel la couche adhésive (11c) présente une épaisseur de 1 à 10 µm.

4. Matériau d'emballage (10, 20, 30) de batterie tout-solide selon l'une quelconque des revendications 1 à 3, dans lequel les au moins deux films (11a, 11b) de résine sont des films de polyester contenant une résine de polyester.

5. Matériau d'emballage (10, 20, 30) de batterie tout-solide selon la revendication 1, dans lequel une transmittance de CO₂ des au moins deux films (11a, 11b) de résine qui est mesurée conformément à JIS K 7126 est de 60 ml·mm/m²·d·MPa ou plus.

6. Matériau d'emballage (10, 20, 30) de batterie tout-solide selon l'une quelconque des revendications 1 à 5, dans lequel la couche d'étanchéité (16) présente un point de fusion de 150 °C ou plus.

7. Matériau d'emballage de batterie tout-solide selon l'une quelconque des revendications 1 à 6, comprenant en outre une couche modifiée qui contient une résine de silicone et est disposée sur la couche (11) de substrat.

8. Batterie tout-solide (50) comprenant :
un corps (52) de batterie qui contient un électrolyte solide ; et
un sac d'emballage (54) qui loge le corps (52) de batterie, dans laquelle
le sac d'emballage (54) est un sac d'emballage obtenu par scellement thermique du matériau d'emballage (10, 20, 30) de batterie tout-solide selon l'une quelconque des revendications 1 à 7.
